# EUROPEAN PATENT SPECIFICATION

(11) **EP 1 591 497 B1**
(45) Date of publication and mention of the grant of the patent: **29.02.2012**
(21) Application number: 05103433.8
(22) Date of filing: 27.04.2005
(51) Int. Cl.: C09D 11/00, C09D 11/10

(54) **Method to improve the quality of dispersion formulations**
Verfahren zur Überwachung der Qualität von Dispersionsformeln
Procédé pour améliorer la qualité des formules de dispersion

(30) Priority: 27.04.2004 EP 04101757
(43) Date of publication of application: 02.11.2005
(73) Proprietor: Agfa Graphics N.V., 2640 Mortsel (BE)
(72) Inventor: Desie, Guido, 2640, Mortsel (BE); Vanmaele, Luc, 2640, Mortsel (BE); Deroover, Geert, 2640, Mortsel (BE)
(74) Representative: Goedeweeck, Rudi

(56) References cited:
- EP-A- 1 078 775
- EP-A1- 1 460 111
- US-A1- 2004 069 182

## Description

### FIELD OF THE INVENTION

The present invention is related with an improved dispersion preparation method, more particularly the preparation of ink-jet ink dispersions.

### BACKGROUND OF THE INVENTION

As disclosed in EP-A 0 878 516 pigment based inks are typically prepared by dispersing pigment agglomerates, formed when individual pigment particles cluster together in a dispersant. The size of the pigment agglomerates may be reduced by grinding the pigment dispersion using conventional grinding media such as glass, stainless steel, or zirconium oxide. Conventional grinding media however have been found to be unacceptable because they either increase the pH of the dispersion to an unacceptable level, resulting in inks having incompatibility with ink processing and printing equipment or result in contamination of the dispersion, thereby leading to discolouration of inks prepared from the above-described pigment dispersions. A solution therefore is based on the discovery that plastic media for grinding colourant dispersions, while satisfactorily reducing the colourant agglomerate size in the pigment dispersion, do not unacceptably alter the pH or unduly contaminate the dispersion, moreover unexpectedly resulting in an ink composition having a superior colour gamut.

In US-A 5,753,390 methods of preparing dispersions of photographically useful compounds ready-for-use in coating solutions of hydrophilic layers of photographic materials, have been disclosed wherein said compounds have ionisable acid sites on their molecules. After deprotonizing and solubilizing steps of such compound in alkaline medium, a microprecipitating step and a milling step of the microprecipitated compound is performed, wherein milling proceeds during and/or after the microprecipitating step. It is suggested therein to perform an ultrasound treatment step during and/or after the said microprecipitating step and/or milling step. Such an an ultrasound treatment step is applied therein in a classical way, i.e. by adding ultrasound energy via a bath, surrounding the batch wherein the dispersion is prepared.

In US-A 6,508,104 it has been established to add ultrasonic energy by sonicating a liquid suspension of first particles and analyzing the thereby separated second particles, in order to determine adhesion force relationships between both of them. In fact the said US-A 6,508,104 discloses a separation technique, followed by a quantitative analysis procedure.

With respect to mechanical pulverising dispersion procedures until the average particle size of pulverise-dispersed agglomerate pigment particles reaches sizes in the range from 10 to 300 nm, in favour of colour density in ink-jet recording materials, it is taught in US-A's 5,958,168 and 6,270,837 to apply a mechanical pulverizing procedure under a high shearing force, wherein as a breaking down method of agglomerate pigment particles in the form of lumps up to finely divided material, mechanical pulverizing means including ultrasonic pulverisers, high speed rotation mills, roll mills, container-drived medium mills, medium stirring mills, jet mills, mortars, sand grinders, pressure-type homogenisers and Cowless dispersers are advantageously applied.

Addition of ultrasonic energy to pigmented inks has further been described in WO 98/44058, wherein the mixture of pigment, polymeric dispersant and aqueous medium is subjected to ultrasonic energy, whereby a narrower particle size distribution is obtained in the ink and wherein, in a preferred embodiment, the step of subjecting the mixture to ultrasonic energy is used in combination with a dispersion step, selected from the group consisting of media milling, two-roll milling and microfluidizing.

Furtheron as described in US-A 6,136,890 dispersants are typically employed in pigmented ink jet inks to stabilise the dispersion to prevent agglomeration or flocculation of the pigment particles and consequent settling of the pigment particles out of the dispersion. It is theorised that dispersing compounds behave by adsorbing onto a pigment surface to create a protective layer around each pigment particle to counteract attractive forces between the particles, thereby preventing agglomeration and flocculation. However there is a need for dispersants useful in ink jet inks that exhibit one or more of the above-described properties, including: the ability to disperse a pigment into a stable dispersion that will not suffer from agglomeration, flocculation, or kogation. A need simultaneously exists for ink jet printer inks that are free or substantially free of organic solvents.

Pigmented ink comprising a liquid medium and a pigment dispersed within the liquid medium, wherein the pigment is stabilised within the liquid medium by a polyurethane dispersant and wherein the polyurethane dispersant comprises a dispersant group, therefor brings a solution.

In US-A 6,245,832 it is described that for dispersing the pigment, a dispersing apparatus using no dispersion media such as glass, ceramic or metal balls or beads is preferred. If a dispersing apparatus using a dispersion media is used, the dispersion media or dispersion vessel is abraded during the grinding or dispersion of the pigment and a large amount of inorganic impurities are often mixed into the pigment dispersion solution or ink. When a dispersing apparatus using a dispersion media is used, it is preferred, if desired, to remove inorganic impurities mixed into the dispersion solution or ink. As a dispersing apparatus using no dispersion media, an ultrasonic homogeniser and a highpressure homogeniser are particularly preferred. In the case of using an ultrasonic homogeniser, the pigment is preferably dispersed after it is defoamed or deaerated by vacuum evacuation or heating or by means of a commercially available defoaming/deaerating apparatus.

In US-A 6,478,862 it has been described that the pigment ink has a nominal particle size of less than about 0.2 µm; and is subjected to ultrasonic mixing using ultrasonic energy.

In example 1 of US 2004/0069182 A1, pigment composition were dispersed in a sand grinder for 4 hours , employing zirconia beads, and further dispersed in an ultrasonic disperser for 10 minutes. There is no disclosure of the removal of the beads.

In example 4 of EP 1078775 A2 a coating solution is prepared by using polyethylene beads in combination with beads.

A method for regulating the average particle diameter of a pigment for an ink composition possessing excellent anti-clogging properties and ejection stability, has been described in US-A 6,562,117 wherein said method comprises the steps of dispersing the pigment in a solvent to prepare a stock pigment dispersion and subjecting the stock pigment dispersion to crossflow membrane filtration.

From our own experience, when making inks having the final composition as envisaged, those inks comprise particle agglomerates in a medium of polymeric stabilisers and additives, but said inks are unacceptable for practical use, due to coarse agglomerates. The "dispersion process" normally involves addition of e.g. zirconium oxide pearls and an overnight roller bench step, but this treatment step imposes considerable drawbacks as explained earlier. When the pearls have to be removed the next day and the resulting dispersion is adjusted to fit into the screening process, this process moreover involves a dilution step for spectral- or Particle-Size-Distribution (PSD)-analysis.

In WO 02/14377 a method has been described to develop nanodispersions in a combinatorial way as, e.g., by means of parallel precipitation technology. Therein it has been described that standard grinding processes starting from solid bulk materials do not typically result in particles with average diameters of less than 0.5 µm. Particle size and distribution depend on a variety of parameters like the type of mill or the crushing parts (e.g. silica) and the need to remove the crushing parts after milling, that leads to further problems related with heterogeneous systems. Larger particle sizes of milled materials indeed require additives to stabilise a dispersion thereof in order to avoid agglomeration, flocculation, sedimentation and flotation. An alternative to start from the molecular solution and to form particles by precipitation results in problems related to crystal growth by Ostwald ripening and/or particle agglomeration, further resulting in sedimentation and/or flotation. The synthesis of dispersion formulations in physically separate synthesis regions proceeds in situ, as described in that application. As is taught therein mild agitition during that synthesis was provided by repeatedly aspirating and dispensing fluid from the vials, and an additional low energy agitation was provided by making use of a small, bench-top ultrasonic mixer that was also used in order to agitate the stock solutions before dispensing said solutions into glass vials, wherein the synthesis should proceed. Said dispersion synthesis method however provides no information about dispersion quality factors obtained thereby.

It remains a stringent demand however to prepare dispersions having high quality dispersion factors.

### OBJECTS AND SUMMARY OF THE INVENTION

Therefore it is an object of the present invention to develop fine well-dispersed formulations. More particularly it is an object of the present invention to prepare fine well-dispersed nanoparticle formulations of pigment based ink jet inks, starting from agglomerates of pigments with unacceptable large sizes.

It is further an ever lasting object to prepare dispersions having an excellent "dispersion quality factor", also called "DQF".

Further objects will become apparent from the description hereinafter.

A solution for the problem set forth hereinbefore has been realised by a method having the specific features set out in claim 1. Specific features for preferred embodiments of the invention are set out in the dependent claims.

Further advantages and embodiments of the present invention will become apparent from the following description.

### DETAILED DESCRIPTION OF THE INVENTION

In the further description it is understood that the term "nanoparticle" refers to a particle having a size lower than 1 µm, and more preferably lower than 250 nm, i.e. more preferably from 10 nm to 100 nm and most preferably in the range between 30 and 100 nm. The term "nanoparticle formulations" refers to a composition wherein additives like viscosity modifying agents (thinners or thickeners), antioxidants, biocides, fungicides, pesticides, stabilizers and, optionally, one or more solvents, are present besides the main substance that should be dispersed to a "nanoparticle" size as defined hereinbefore.

The term "dispersion quality factor" is calculated herein as a ratio of absorption intensities,
- measured at 435 nm and 600 nm respectively (for a yellow dye)
- measured at 562 nm and 650 nm respectively (for a magenta dye)
- measured at 615 nm and 830 nm respectively (for a cyan dye) from an absorption spectrum of a diluted sample of said multi-compositional dispersion, recorded on a Shimadzu® 3401PC UV-VIS NIR spectrophotometer.

In the method of preparing dispersions of a multi-composition formulation according to the present invention said multi-composition formulation essentially comprises beads having a diameter of 20 µm or more and said method is moreover characterised by a step of adding ultrasonic energy to a probe inserted into said formulation, and filtering off said beads.

According to a preferred embodiment of the method of the present invention dispersions become available having a dispersion quality factor DQF of at least 100.

In a preferred embodiment according to the present invention said dispersion quality factor is at least 500 and in an even more preferred embodiment said dispersion quality factor is even up to 1000.

In the method according to the present invention said beads are composed of glass.

Furtheron in the method according to the present invention said beads have a particle size diameter in the range from 25 µm to 200 µm.

In the method according to the present invention, said formulation is selected from the group consisting of aqueous, solvent based, oil based and radiation curable ink-jet ink dispersion formulations, comprising at least a pigment and a binder. So in a preferred embodiment said formulation comprises a pigment based ink-jet ink and furtheron said ink-jet ink formulation further comprises at least one colourant.

In one embodiment according to the method of the present invention adding beads to said formulation is performed in a bead weight amount being higher than a weight amount of said pigment.

In another embodiment according to the method of the present invention adding beads to said formulation is performed in a weight amount of more than twice a weight amount of said pigment.

According to the present invention, further additives present in said formulation are selected from the group consisting of viscosity modifying agents (i.e. thinners or thickeners), antioxidants, biocides, fungicides, pesticides, stabilizers and solvents. Optionally one or more solvents may be present.

According to the present invention said method is performed in batch or in a continuous flow-through mode. Dispersion preparations in batch are discontinuous, opposite to the continuous flow-through preparation mode. In both cases however it is required to filter off the beads, in order to get at last a dispersion free from beads. So it is clear that when working in a continuous mode, before leaving the "flow-through" or "dispersion chamber", wherein one or more ultrasonic probe(s) are inserted, the dispersed flow should be filtered, in order to get a dispersion free from beads as a desired dispersed product. In order to avoid escape of beads from the formulation to be dispersed by the addition of ultrasonic energy wherein said energy is provided via one or more inserted probes or tips, it is recommended to have a filter at the site where the formulation is entering the "flow-through" or "dispersion chamber".

Nanoparticle dispersions thus prepared provide, in a preferred embodiment, an average particle size, reported in terms of hydrodynamic radius of dispersed particles in said dispersion, in the range from 10 nm to 10000 nm (10 µm). In a more preferred embodiment dispersed particles in said dispersion have a particle size in the range from 10 to 300 nm and most preferably, dispersed particles in said dispersion are at most 100 nm.

According to the present invention a dispersion prepared according to the method as described before thus becomes available.

More in detail UV curable ink-jet ink formulations that are particularly suitable for use as well-dispersed pigment based ink-jet inks prepared according to the methods of the present invention, comprise following ingredients:
(i) monomers and/or oligomers,
(ii) photo-initiator(s),
(iii) synergistic working additive(s) and
(iv) colorant(s) with, optionally, in addition, one or more surfactant(s), dispersant(s), resin(s), inhibitor(s), hardener(s) and stabilizer(s).

### Monomers and oligomers

UV-curable ink-jet inks contain monomers and/or oligomers, which are polymerized by the curing means of the ink-jet printer. Monomers, oligomers or prepolymers may possess different degrees of functionality, and a mixture including combinations of mono-, di-, tri-and higher functionality monomers, oligomers or prepolymers may be used. These components are curable, typically photo-curable, e.g. UV curable, and should adhere to the ink-receiver surface after printing and serve to bind the colorant.

Adjusting the ratio between the monomers and oligomers is also a method of adjusting the viscosity of the ink. A higher functionality results in a higher viscosity.

Any method of conventional radical polymerization, photo-curing system using photo-acid or photo-base generator, or photo-induced alternating copolymerization may be employed. In general, radical polymerization and cationic polymerization are preferred, and photo-induced alternating copolymerization requiring no initiator may also be employed. Further, a hybrid system of combinations of these systems is also effective.

Cationic polymerization is superior in effectiveness due to lack of inhibition of polymerization by oxygen, however it is slow and its cost is high. If cationic polymerization is used, it is preferred to use an epoxy compound together with an oxetane compound to increase the rate of polymerization.

Radical polymerization is the most widely employed process. Preferred embodiments of radical polymerization will be described below.

Any polymerizable compound commonly known in the art may be employed. Particularly preferred for the ink-jet ink of the ink-jet printing system of the present invention are monofunctional and/or polyfunctional acrylate monomers, oligomers or prepolymers, such as isoamyl acrylate, stearyl acrylate, lauryl acrylate, octyl acrylate, decyl acrylate, isoamylstyl acrylate, isostearyl acrylate, 2-ethylhexyl-diglycol acrylate, 2-hydroxybutyl acrylate, 2-acryloyl-oxyethyl-hexahydrophthalic acid, butoxyethyl acrylate, ethoxydiethylene glycol acrylate, methoxydiethylene glycol acrylate, methoxypolyethylene glycol acrylate, methoxypropylene glycol acrylate, phenoxyethyl acrylate, tetrahydrofurfuryl acrylate, isobornyl acrylate, 2-hydroxyethyl acrylate, 2-hydroxypropyl acrylate, 2-hydroxy-3-phenoxypropyl acrylate, vinyl ether acrylate such as described in US-A 6,310,115, 2-(vinyloxy)ethylacrylate, 2-acryloyl-oxyethylsuccinic acid, 2-acryloyxyethylphthalic acid, 2-acryl-oxyethyl-2-hydroxyethyl-phthalic acid, lactone modified flexible acrylate, and t-butylcyclohexyl acrylate, triethylene glycol diacrylate, tetraethylene glycol diacrylate, polyethylene glycol diacrylate,dipropylene glycol diacrylate, tripropylene glycol diacrylate, polypropylene glycol diacrylate, 1,4-butanediol diacrylate, 1,6-hexanediol diacrylate, 1,9-nonanediol diacrylate, neopentyl glycol diacrylate, dimethylol-tricyclodecane diacrylate, bisphenol A EO (ethylene oxide) adduct diacrylate, bisphenol A PO (propylene oxide) adduct diacrylate, hydroxypivalate neopentyl glycol diacrylate, alkoxylated dimethyloltricyclodecane diacrylate and polytetramethylene glycol diacrylate, trimethylolpropane triacrylate, EO modified trimethylolpropane triacrylate, tri (propylene glycol) triacrylate, caprolactone modified trimethylolpropane triacrylate, pentaerythritol triacrylate, pentaerithritol tetraacrylate, pentaerythritolethoxy tetraacrylate, dipentaerythritol hexaacrylate, ditrimethylolpropane tetraacrylate, glycerinpropoxy triacrylate, and caprolactam modified dipentaerythritol hexa-acrylate, or an N-vinylamide such as, N-vinyl-caprolactam or N- vinylformamide ; or acrylamide or a substituted acrylamide, such as acryloylmorpholine; and amino functionalized polyetheracrylates such as described in US-A 6,300,388.

Furthermore, methacrylates corresponding to the above-mentioned acrylates may be used with these acrylates. Of the methacrylates, methoxypolyethylene glycol methacrylate, methoxytriethylene glycol methacrylate, 4-(vinyloxy)butylmethacrylate, vinyl acrylates such as described in US-A 6,310,115 (known as its EP-A 0 997 508 counterpart), hydroxyethyl methacrylate, phenoxyethyl methacrylate, cyclohexyl methacrylate, tetraethylene glycol dimethacrylate, and polyethylene glycol dimethacrylate are preferred due to their relatively high sensitivity and improved adhesion to an ink-receiver surface.

Furthermore, the ink-jet inks may also contain polymerizable oligomers. Examples of these polymerizable oligomers include epoxy acrylates, aliphatic urethane acrylates, aromatic urethane acrylates, polyester acrylates, and straight-chained acrylic oligomers.

### Photo-initiators

A catalyst called a photo-initiator typically initiates the polymerization reaction. The photo-initiator requires less energy to activate than the monomers and oligomers to form the polymer.

The photo-initiator absorbs light and is responsible for the production of free radicals or cations. Free radicals or cations are high-energy species that induce polymerization of monomers, oligomers and polymers and with polyfunctional monomers and oligomers thereby also inducing cross-linking.

A preferred amount of initiator is 1-10 weight % of the total ink weight, and more preferably 1-6 weight % of the total ink weight.

Irradiation with actinic radiation may be realized in two steps by changing wavelength or intensity. In such cases it is preferred to use 2 types of initiator together.

Photo-initiators are necessary for free radical curing and may include, but are not limited to, the following compounds or combinations thereof: benzophenone and substituted benzophenones, 1-hydroxycyclohexyl phenyl ketone, thioxanthones such as isopropylthioxanthone,2-hydroxy-2-methyl-1-phenylpropan-1-one, 2-benzyl-2-dimethylamino- (4-morpholinophenyl) butan-1-one, benzil dimethylketal, bis (2,6- dimethylbenzoyl)-2,4,4-trimethylpentyl-phosphine oxide, 2,4,6-trimethylbenzoyldiphenylphosphine oxide, 2-methyl-1- [4-(methylthio)phenyl]-2-morpholinopropan-1-one, 2,2-dimethoxy-1, 2-diphenylethan-1-one or 5,7-diiodo-3- butoxy-6-fluorone, diphenyliodonium fluoride and triphenylsulfonium hexafluo-phosphate.

Suitable photo-initiators for ink-jet ink formulations include Irgacure® 184, Irgacure® 500, Irgacure® 907, Irgacure® 369, Irgacure® 1700, Irgacure® 651, Irgacure® 819, Irgacure® 1000, Irgacure® 1300, Irgacure® 1870, Darocure® 1173 and Darocure® 4265 available from CIBA SPECIALTY CHEMICALS, Lucerin TPO available from BASF AG, Esacure® KT046, Esacure® KIP150, Esacure® KT37 and Esacure® EDB available from LAMBERTI, H-Nu® 470 and H-Nu® 470X available from SPECTRA GROUP Ltd. and isopropyl-thioxanthone.

### Inhibitors

A polymerization inhibitor to restrain polymerization by heat or actinic radiation in an ink-jet ink may be added to the formulation. It is preferred to add an inhibitor during preparation of the colorant dispersion. Various compounds are known as polymerization inhibitors, and these compounds may be employed without modification. Examples of polymerization inhibitors include phenol type antioxidants, hindered amine light stabilizers, phosphor type antioxidants, hydroquinonemonomethyl ether commonly used in (metha)acrylate monomers, and hydroquinone, t-butylcatechol, pyrogallol may also be used. Of these, a phenol compound having a double bond in molecules derived from acrylic acid is particularly preferred due to its having a polymerization-restraining effect even when heated in a closed, oxygen-free environment. Suitable inhibitors are, for example, Sumilizer® GA-80, Sumilizer® GM and Sumilizer® GS produced by Sumitomo Chemical Co., Ltd.

Since excessive addition of these polymerization inhibitors will lower the ink sensitivity to curing, it is preferred that the amount capable of preventing polymerization be determined prior to blending. The amount of a polymerization inhibitor is generally between 200 and 20000 ppm of the total ink weight.

Suitable combinations of compounds which decrease oxygen polymerization inhibition with radical polymerization inhibitors are: 2-benzyl-2-dimethylamino-1-(4-morpholinophenyl)-butane-1 and 1-hydroxy-cyclohexyl-phenyl-ketone; 1-hydroxy-cyclohexyl-phenyl-ketone and benzophenone; 2-methyl-1[4-(methylthio)phenyl]-2-morpholinopropane-1-on or 2-methyl-1[4-(methylthio)phenyl]-2-morpholinopropane-1-on and diethyltuioxanthone or isopropylthioxanthone; and benzophenone and acrylate derivatives having a tertiary amino group, and addition of tertiary amines. An amine compound is commonly employed to decrease an oxygen polymerization inhibition or to increase sensitivity. However, when an amine compound is used in combination with a high acid value compound, the storage stability at high temperature tends to be decreased. Therefore, specifically, the use of an amine compound with a high acid value compound in ink-jet printing should be avoided.

Synergistic additives may be used to improve the curing quality and to diminish the influence of the oxygen inhibition. Such additives include, but are not limited to ACTILANE® 800 and ACTILANE® 725 available from AKZO NOBEL, Ebecryl® P115 and Ebecryl® 350 available from UCB CHEMICALS and CD 1012, Craynor CN 386 (amine modified acrylate) and Craynor CN 501(amine modified ethoxylated trimethylolpropane triacrylate) available from CRAY VALLEY.

### Colorants

The ink-jet ink formulations further comprise at least one colorant and any colorant may be used to impart the desired color to the ink. In particular embodiments of the present invention the colorant may include at least one pigment, one dye, or a combination thereof. A wide variety of organic and inorganic dyes and pigments, alone or in combination may be selected for use in the ink compositions of this invention. The pigment particles should be sufficiently small to permit free flow of the ink through the ink jet printing device, especially at the ejecting nozzles that usually have a diameter ranging from 10 µm to 50 µm. The pigment particle size also has an influence on the pigment dispersion stability, which is critical throughout the life of the ink. It is also desirable to use small particles for maximum color strength.

Accordingly, the average particle diameter may be from about 0.005 µm to about 15 µm. Preferably, the pigment particle size may range from about 0.005 to about 5 µm, more preferably from about 0.005 to about 1 µm, and most preferably from about 0.005 to about 0.3 µm. Pigment particle sizes outside these ranges may, of course, be used as long as the objectives of the present invention are achieved.

The pigment can be black, cyan, magenta, yellow, red, blue, green, brown, mixtures thereof, and the like. For example, suitable pigment materials include carbon blacks such as Regal 400R, Mogul L, Elftex 320 from Cabot Co., or Carbon Black FW18, Special Black 250, Special Black 350, Special Black 550, Printex 25, Printex 35, Printex 55, Printex 150T from Degussa Co., and Pigment Black 7, 11, 26 and 28. Additional examples of suitable pigments are disclosed in, for example US-A 5,389,133 to Gundlach et al.. Suitable pigments include, for instance, as red pigments Pigment Red 1-10, 12, 19, 22, 23, 31, 38, 41, 43, 48:1, 48:2, 48:3, 48:4, 48:5, 49:1, 49:2, 52:1, 53:1, 57:1, 58:4, 63:1, 81, 81:1, 81:3, 81:4, 81:X, 88, 101, 104, 108, 112, 122, 123, 144, 146, 149, 166, 168, 169, 170, 177, 178, 179, 184, 185, 208, 216, 226, 257; as violet pigments Pigment Violet 1, 3, 19, 23, 29, 30, 37, 50, and 88; as blue or cyan pigments: Pigment Blue 1, 1:2, 1:X, 15, 15:1, 15:2, 15:3, 15:4, 15:6, 16, 17-1, 22, 27, 28, 29, 36, 56, 60, 61 and 62; as green pigments: Pigment Green 7, 26, 36, and 50; as yellow pigments: Pigment Yellow 1, 3, 12, 13, 14, 17, 34, 35, 37, 42, 55, 74, 81, 83, 93, 94, 95, 97, 108, 109, 110, 126, 128, 137, 138, 139, 151, 153, 154, 155, 157, 166, 167, 168, 177, 180, 185 and 193; as white pigments: Pigment White 6, 18, and 21; as orange pigments Pigment Orange 5, 13, 16, 34, as brown pigments Pigment Brown 6, 7, 7:X, Pigment Metal 1, Pigment Metal 2, and bridged aluminum phthalocyanine pigments.

Furtheron the pigment may be chosen from those disclosed in Industrial Organic Pigments, Production, Properties, Applications, second edition, W. Herbst, K. Hunger ; VCH, 1997.

Most preferred pigments are Pigment Yellow 128, 93, 17, 74, 138, 139, 154, 185, 180; Pigment Red 122, 57:1, 184; Pigment Blue 15:3, 15:4, and carbon black.

While carbon black is usually used as the coloring material in black ink, it exhibits a high ultraviolet absorption, resulting in problems of rather low sensitivity in UV curing methods. Therefore, black ink using plural color pigments other than titanium black or carbon black, may be used to produce black images exhibiting a good UV transparency. Thus, the black ink works quite effectively in ink-jet printing to improve interior hardening in shadow areas where a large amount of ink is specifically ejected in one spot with plural colors. Further, it also works effectively in bi-directional printing. The particles of the pigment dispersed in the ink-jet ink should have a particle size of less than 10 µm, preferably less than 3 µm, and most preferably less than 1 µm. The average particle size of pigment particles is preferably 0.05 to 0.5 µm. By controlling the particle size, clogging of the print head nozzle can be prevented, and ink storage stability, ink transparency and ink curing sensitivity can be maintained.

The pigment may, but need not, be in the form of a dispersion comprising a dispersant also called pigment stabilizer. The latter may be, for example, of the polyester, polyurethane of polyacrylate type, especially in the form of a high molecular weight block copolymer, and would typically be incorporated at 2.5% to 100% by weight of the pigment. Suitable examples are DISPERBYK (ex BYK Chemie) or SOLSPERSE (ex Zeneca) dispersants. A detailed list of non-polymeric as well as some polymeric dispersants appears in, for example, McCutcheon's Functional Materials, North American Edition, Manufacturing Confectioner Publishing Co., Glen Rock, N.J., pp. 110-129 (1990). Other pigment stabilizers are disclosed in DE 19636382, US-A's 5,720,802 and 5,713,993, PCT/GB95/02501, US-A 5,085,689 and GB 2303376. The pigment or dye may be present in the ink composition in any effective amount, generally from about 0.5 to about 20 % by weight of the ink.

### Resins

The ink-jet ink formulations may further contain a resin in order to obtain a stable dispersion of the colorant in the ink-jet ink. Resins are not specifically restricted, but the following resins are preferred: petroleum type resins (e.g., styrene type, acryl type, polyester, polyurethane type, phenol type, butyral type, cellulose type, and rosin) and thermoplastic resins (e.g., vinyl chloride, vinylacetate type). Concrete examples of these resins include acrylate copolymers, styrene-acrylate copolymers, acetalized and incompletely saponified polyvinyl alcohol, and vinylacetate copolymers. Commercial resins are known under the tradenames Solsperse® 32000 and Solsperse® 39000 available from AVECIA, EFKA® 4046 available from EFKA CHEMICALS BV, Disperbyk® 168 available from BYK CHEMIE GMBH.

The resin content in the ink-jet ink is preferably controlled to give a viscosity of less than 100 mPa.s, preferably less than 50 mPa.s, and more preferably less than 30 mPa.s at a shear rate of 100s⁻¹.

### Dispersants and surfactants

Addition of a suitable surfactant or a compound with surface active properties can be used to decrease the dispersive surface energy of the ink-jet ink. A fluorinated or silicone compound may be used as a surfactant, however, a potential drawback is bleed-out after image formation because the surfactant does not cross-link. It is therefore preferred to use a copolymerizable monomer having surface-active effects, for example, silicone-modified acrylates, silicone modified methacrylates, fluorinated acrylates, and fluorinated methacrylates. Specific examples are disclosed in WO 9929787A(XAAR TECHNOLOGY LTD) and WO 9929788 A (XAAR TECHNOLOGY LTD). Suitable examples of surfactants for use in the ink-jet ink formulations include, but are not limited to, ACTILANE® 800 available from AKZO-NOBEL, Tego glide® 410, Tego glide® 435, Tego glide® 440, Tego glide® 450, Tego flow® 300, Tego flow® 425, Tego flow® ZFS460, Tego rad® 2100, Tego rad® 2200-N, Tego rad® 2600, Tego rad® 2700,Tego disperse® 610, Tego disperse® 710, Tego wet® ZFS453 and Tego wet® 250 available from DEGUSSA, Dow corning 67® available from DOW CORNING, Surfadone® 300 available from INTERNATIONAL SPECIALTY PRODUCTS, FC-430®, FC-171® and FC-431® available from 3M, BYK® 306, BYK® 333, BYK® antiterra-u, Disperbyk® 108 and BYK® antiterra 204 available from BYK CHEMIE GMBH, and EFKA® 47 and EFKA® 400 available from EFKA CHEMICALS.

### Organic solvents

It can be advantageous to add an extremely small amount of an organic solvent to the ink-jet ink formulations in order to improve adhesion to the ink-receiver surface after UV curing. In this case, the added solvent can be any amount in the range which does not cause problems of solvent resistance and VOC, and preferably 0.1-5.0%, and particularly preferably 0.1-3.0%. Suitable organic solvents include alcohol, aromatic hydrocarbons, ketones, esters, aliphatic hydrocarbons, higher fatty acids, carbitols, cellosolves, higher fatty acid esters. Suitable alcohols include, methanol, ethanol, propanol and butanol. Suitable aromatic hydrocarbons include toluene, and xylene. Suitable ketones include methyl ethyl ketone and methyl isobutyl ketone.

### Other Additives

Inks of the UV-curable type may include additives such as biocides - as metal or metal oxide (e.g. silver silver oxide, titanum dioxide, zinc oxide) nanoparticles, without however being limitated thereto -, buffering agents, anti-mold agents, pH adjustment agents, electric conductivity adjustment agents, chelating agents, anti-rusting agents, polymerisation inhibitors, light stabilizers, and the like. Such additives may be included in the ink jet inks in any effective amount, as desired.
Examples of pH controlling agents suitable for inks of the UV-curable type include, but are not limited to, acids; bases, including hydroxides of alkali metals such as lithium hydroxide, sodium hydroxide and potassium hydroxide. The amount included will depend, of course, on the specific component being included. Furtheron, the ink composition of the UV-curable type may also comprise surfactants and photoinitiator stabilizers. Suitable photoinitiator stabilizers include those disclosed in EP 0 465 039. Suitable surfactants are preferably of the non-ionic type, for example FLUORAD FC430 (ex 3M Corp.). Such surfactants when present are preferably included in an amount of 0.1% to 10% by weight of the total composition. Compositions may further contain organic solvents, such as alcohols, fluorinated solvents and dipolar aprotic solvents. Preferably methanol, ethanol, propanol, 1-butanol, 1-pentanol, 2-butanol, t.-butanol, glycol, glycolethers, N-methylpyrrolidone, N,N-dimethylacetamid, N,N-dimethylformamid, 2,4-pentanedione, and hexafluoroaceton are used.

Ink-jet ink formulations may further contain a dendrimer.

In formulating final ink-jet ink formulations, certain physical properties should be satisfied. For example, ink compositions for use in ink-jet recording processes should have appropriate viscosity and surface tension characteristics. So it is preferred that such a formulation has a viscosity of from about 1 to about 75 mPa.s at 25°C. The surface tension is preferably from 20 to 72 mN/m and most preferably from 20 to 60 mN/m.

Apparatuses for radiation curing in case of curing inks are known to those skilled in the art and are commercially available. For example, the curing proceeds with medium pressure mercury vapor lamps with or without electrodes, or pulsed xenon lamps. These ultraviolet sources usually are equipped with a cooling installation, an installation to remove the produced ozone and optionally a nitrogen inflow to exclude air from the surface of the product to be cured during radiation processing. An intensity of 40 to 240 W/cm in the 200-400 nm region is usually employed. An example of a commercially available ultraviolet medium-pressure electrodeless mercury vapor lamp is the model VPS/I600 curing system of Fusion UV systems Ltd., UK. A pulsed xenon flash lamp is commercially available from IST Strahlentechnik GmbH, Nurtingen, Germany. Using the Fusion model one has also the possibility to use metal halide doped Hg vapor or XeCl excimer lamps, each with its specific UV emission spectrum. This permits a higher degree of freedom in formulating the curing composition: a more efficient curing is possible using the lamp with the most appropriate spectral characteristics.

High energy ionizing radiation such as X-rays, µ-rays, µ-rays, electron beam curing and accelerated electrons may also be used to accomplish curing of an ink composition.

The ink jet receiver materials to which the ink composition of the present invention can be jetted are not limited and include e.g. paper, coated paper, polyolefin coated paper, cardboard, wood, composite boards, plastic, coated plastic, canvas, textile, metal and ceramics.

### Examples

While the present invention will hereinafter be described in connection with preferred embodiments thereof, it will be understood that it is not intended to limit the invention to those embodiments.

While ultrasonic or ultraturrax techniques were performed, all dispersions were kept at a temperature of 15°C, unless otherwise specified in the description of the examples hereinafter.

In a first experiment ink-jet ink dispersions were prepared by weighing 600 mg of pigment powder on an Autodose Powdernium® MTM solid handler into small glass test tubes having an outer diameter of 13 mm and an height of 75 mm.

A rack with tubes was then moved to an Anachem SK233 liquid handler to add an amount as tabulated in Table 1 of a stock solution of a polymeric dispersant and distilled water. Dosing on the SK233 was done in volumetric mode.

After magnetic stirring on a 60-position Variomag stirrer for 30 minutes, the test tubes were further used in a next dispersion improving step.

**Table 1**

| Ink number | Pigment type | Pigment weight (mg) | Polymer stabilizing dispersant | Polymer volume (µl) | Distilled water (µl) |
|---|---|---|---|---|---|
| I_1 | PB15:3 | 500 | PSPAA1 | 1930 | 70 |
| I_2 | PR122 | 500 | PSPAA1 | 1930 | 70 |
| I_3 | PY74 | 500 | PSPAA1 | 1930 | 70 |
| I_4 | PB15:3 | 600 | PSPAA2 | 390 | 2700 |
| I_5 | PB15:3 | 600 | PSPAA2 | 1950 | 1500 |

| | | | | | |
|---|---|---|---|---|---|
| PB = Pigment Blue; PR = Pigment Red; PY = Pigment Yellow PSPAA1 and PSPAA2 are polystyrene-polyacrylic acid polymeric dispersants, in stock solution concentrations of 22 wt% and 44 wt% respectively. | | | | | |

### Examples 1-6: comparative examples:

In a first experiment said set of inks was measured without dispersion improvement treatment and after an improvement treatment on a Tomtec Autogizer equiped with individual Sonics® probes of maximum 130 Watt and a 6 mm diameter probe or tip. The device was operated in a fast serial way, with as main variation the duration of the ultrasonic treatment. After the dispersion improvement treatment the resulting dispersion was diluted by a factor of about 5000 (depending on the extinction coefficient of the colourant). This was done on the SK233 liquid handler in 2 or 3 separate steps in order to obtain a high dilution accuracy (e.g. 700 µl of the MK8490 in 34.3 ml distilled water, and then again 400 µl of this diluted dispersion into 34.6 ml of distilled water). An absorption spectrum of this diluted dispersion was recorded on a Shimadzu 3401PC UV-VIS NIR spectrophotometer and the absorption intensity was measured at 615 nm and 830 nm. The ratio of these absorption values I615/I830 was tabulated in Table 2 as the "Dispersion Quality Factor" (DQF), "COMP" referring to COMParatives (COMP) without dispersion treatment step and "COMP US" referring to COMParatives with an ultrasonic dispersion treatment step (but without beads).

**Table 2**

| Example | Ink | Dispersion Treatment | DQF |
|---|---|---|---|
| COMP 1 | I_1 | None | 3.8 |
| COMP 2 | I_2 | None | 2.3 |
| COMP 3 | I_3 | None | 2.9 |
| COMP 4 | I_4 | None | 2.3 |
| COMP 5 | I_5 | None | 3.1 |
| COMP EX 1 | I_4 | 20 min. US on TOMTEC | 5.1 |
| COMP EX 2 | I_4 | 60 min. US on TOMTEC | 6.0 |
| COMP EX 3 | I_4 | 120 min. US on TOMTEC | 7.2 |
| COMP EX 4 | I_5 | 20 min. US on TOMTEC | 10.2 |
| COMP EX 5 | I_5 | 60 min. US on TOMTEC | 16.3 |
| COMP EX 6 | I_5 | 120 min. US on TOMTEC | 21.6 |

It is clear from these experiments set forth in Table 2 that without a dispersion improvement step the dispersion quality factor is lower than 5, indicating that a lot of large pigment clusters/agglomerates remain present in the ink, and, as a result, the jetting behaviour in real ink jet printing heads will not be good.

By introducing a fast serial ultrasonic dispersing aid the dispersion quality factor can be increased to a certain extent. With a low concentration of polymeric dispersant only moderate improvements are realised.

With higher concentrations of said polymeric dispersant better dispersion quality factors can be realised.

If compared with the traditional and time consuming method to develop and test inks, this first step provides a somewhat better discrimination between good and bad compositions.

### Examples 7-9: comparative examples:

The same ink as in example 1 was used, but instead of an ultrasonic treatment on the Tomtec Autogizer, the robot was equiped with high speed homogenisers (Ultraturrax, high speed cutters) and the inks of the examples were treated as described in Table 3. After the dispersion improvement treatment the dispersion quality factors were determined as described for example 1. The dispersions wherein a treatment step was performed with the Ultraturrax homogeniser are called "COMP UT".

**Table 3**

| Example | Ink | Dispersion Treatment | DQF |
|---|---|---|---|
| COMP 1 | I_1 | None | 3.8 |
| COMP UT 7 | I_1 | 9 min. UT at 60% on TOMTEC | 11 |
| COMP UT 8 | I_1 | 50 min. UT at 30% on TOMTEC | 10 |
| COMP UT 9 | I_1 | 30 min. UT at 60% on TOMTEC | 12 |

It is clear that the dispersion improvement step, based upon a rapid parallel/serial high speed cutting principle yields somewhat better dispersions than without a dispersion improvement step.

### Examples 10-18: comparative examples:

The same experiments as described for examples 7-9 were performed except that in the test tubes used on the Tomtec Autogizer additional milling beads were added and tested.

Those different milling beads had the typical properties as tabulated in Table 4.

Abbreviations used have following significance:
LD-PE = Low density Poly Ethylene;
PS-DVB = polystyrene-divinyl benzene;
Hybrid glass = TOSPEARL from TOSHIBA, Tokyo, Japan.

**Table 4**

| Bead number | Chemical class | Mean particle diameter (µm) |
|---|---|---|
| B_1 | Glass | 60 |
| B_2 | Glass | 230 |
| B_3 | Glass | 40 |
| B_4 | Glass | 35 |
| B_5 | Glass | 20 |
| B_6 | LD - PE | 180 |
| B_7 | PS-DVB | 100 |
| B_8 | PS-DVB | 50 |
| B_9 | Hybrid glass | 12 |

After an ultraturrax (UT) dispersion improvement step the dispersion quality factor was determined as described in example 1. The results are given in Table 5.

**Table 5**

| Example | Ink | Beads | Dispersion Treatment | DQF |
|---|---|---|---|---|
| COMP 1 | I_1 | No | None | 3.8 |
| COMP 2 | I_2 | No | None | 2.3 |
| COMP 3 | I_3 | No | None | 2.9 |
| COMP UT 10 | I_1 | No | 60 minutes UT on TOMTEC | 16 |
| COMP UT 11 | I_2 | No | 60 minutes UT on TOMTEC | 9 |
| COMP UT 12 | I_3 | No | 60 minutes UT on TOMTEC | 11 |
| COMP UT 13 | I_1 | 100 mg B_1 | 15 minutes UT on TOMTEC | 17 |
| COMP UT 14 | I_2 | 100 mg B_1 | 15 minutes UT on TOMTEC | 8 |
| COMP UT 15 | I_3 | 100 mg B_1 | 15 minutes UT on TOMTEC | 11 |
| COMP UT 16 | I_1 | 100 mg B_2 | 15 minutes UT on TOMTEC | 14 |
| COMP UT 17 | I_2 | 100 mg B_2 | 15 minutes UT on TOMTEC | 6 |
| COMP UT 18 | I_3 | 100 mg B_2 | 15 minutes UT on TOMTEC | 7 |

As is clear from the figures in Table 5 the dispersion quality can be performed on a small sample size scale, while the addition of extra particles in the sample tubes can slightly improve the process, or reduce the treatment time. If compared with the ultrasonic dispersion improvement process the ultraturrax (high speed cutter) technology does however not yield improvements as efficient as attained with ultrasonic technology as will be illustrated hereinafter.

### Inventive Examples 19-42:

The ink I_2 was prepared as described in examples above. A microtiter plate with a volume of 2 ml was used and the final volume was increased to 800 µl. Milling beads were added to the final prepared pre-dispersion and then the full microtiter plate was set on the Sonics® 24-pins ultrasonic processor at 30% of the full power for dispersion quality improvement.

The parallel ultrasonic treatment was done for these examples during 4 hours at 30% of the maximum power of the Sonics® processor; the temperature of the dispersions was kept at 20° C using a cooling circuit.

After this dispersion improvement process the dispersion quality factors were determined as described in example 1 and a summary of the results is given in the Table 6 hereinafter.

In the experimental design setup some experiments have been repeated twice or even three times, not only in order to fill each site of the plate, but also in order to control the reproducibility.

From the results in Table 6 hereinafter it is clear that remarkable and unexpected improvements can be obtained by adding dispersing beads to the dispersions and that DQF-values of more than 100, more than 500 and even more than 900 are attained.

**Table 6**

| Example | Ink | Beads type | Beads (mg) | Dispersion Treatment | DQF |
|---|---|---|---|---|---|
| COMP 2 | I_2 | No | 0 | None | 2.3 |
| INV EX 19 | I_2 | B_3 | 50 | 4 hours on SONICS-24 | 30 |
| INV EX 20 | I_2 | B_4 | 100 | 4 hours on SONICS-24 | 73 |
| COMP EX 21 | I_2 | None | 0 | 4 hours on SONICS-24 | 20 |
| INV EX 22 | I_2 | B_4 | 300 | 4 hours on SONICS-24 | 421 |
| INV EX 23 | I_2 | B_3 | 400 | 4 hours on SONICS-24 | 911 |
| INV EX 24 | I_2 | B_3 | 75 | 4 hours on SONICS-24 | 57 |
| COMP EX 25 | I_2 | None | 0 | 4 hours on SONICS-24 | 17 |
| INV EX 26 | I_2 | B_5 | 150 | 4 hours on SONICS-24 | 42 |
| INV EX 27 | I_2 | B_3 | 300 | 4 hours on SONICS-24 | 564 |
| INV EX 28 | I_2 | B_4 | 300 | 4 hours on SONICS-24 | 392 |
| INV EX 29 | I_2 | B_5 | 300 | 4 hours on SONICS-24 | 45 |
| INV EX 30 | I_2 | B_5 | 75 | 4 hours on SONICS-24 | 35 |
| INV EX 31 | I_2 | B_5 | 75 | 4 hours on SONICS-24 | 36 |
| INV EX 32 | I_2 | B_4 | 150 | 4 hours on SONICS-24 | 118 |
| INV EX 33 | I_2 | B_3 | 150 | 4 hours on SONICS-24 | 97 |
| INV EX 34 | I_2 | B_4 | 75 | 4 hours on SONICS-24 | 53 |
| COMP EX 35 | I_2 | None | 0 | 4 hours on SONICS-24 | 18 |
| INV EX 36 | I_2 | B_4 | 150 | 4 hours on SONICS-24 | 122 |
| INV EX 37 | I_2 | B_4 | 75 | 4 hours on SONICS-24 | 57 |
| INV EX 38 | I_2 | B_5 | 50 | 4 hours on SONICS-24 | 32 |
| INV EX 39 | I_2 | B_4 | 300 | 4 hours on SONICS-24 | 430 |
| INV EX 40 | I_2 | B_5 | 300 | 4 hours on SONICS-24 | 45 |
| INV EX 41 | I_2 | B_5 | 400 | 4 hours on SONICS-24 | 64 |
| INV EX 42 | I_2 | B_5 | 150 | 4 hours on SONICS-24 | 44 |

According to the present invention the step of adding beads to the dispersion in combination with ultrasonic treatment is thus required in order to get well-dispersed inks with high dispersion quality factors. More particularly when envisaging DQF-values of 100 and more, the method as disclosed is very useful.

Adding beads to the dispersion comprising a pigment is advantageously performed in a bead weight amount being larger than pigment weight amount, as, e.g., more than 50 mg for a weight of 50 mg of a pigment, and even more preferably in an amount of more than twice the said pigment weight amount.

### Inventive Examples 43-51:

From the experiments, the results of which have been summarised in Table 7, it becomes further clear that the nature of the particles added into the dispersion improvement step has a big influence on the final quality. Glass beads perform better than PS or PE beads, smaller particle diameters perform better than larger ones. However, there is also a limit on the particle size: if it is dropping below a diameter of 20 µm, then the improvements in the dispersion process are very small again. Beads added in the dispersion improvement step are advantageously composed of glass.

It is even more preferred, according to the method of the present invention that the beads have a particle size diameter in the range from 25 µm to 200 µm.

**Table 7**

| Example | Ink | Beads type | Beads* | Dispersion Treatment | DQF |
|---|---|---|---|---|---|
| COMP 2 | I_2 | No | - | None | 2.3 |
| COMP EX 43 | I_2 | No | - | 4 hours on SONICS-24 | 27 |
| INV EX 44 | I_2 | B_1 | 60 | 4 hours on SONICS-24 | 82 |
| INV EX 45 | I_2 | B_2 | 230 | 4 hours on SONICS-24 | 38 |
| INV EX 46 | I_2 | B_3 | 40 | 4 hours on SONICS-24 | 179 |
| INV EX 47 | I_2 | B_4 | 35 | 4 hours on SONICS-24 | 319 |
| INV EX 48 | I_2 | B_5 | 20 | 4 hours on SONICS-24 | 103 |
| INV EX 49 | I_2 | B_6 | 180 | 4 hours on SONICS-24 | 58 |
| INV EX 50 | I_2 | B_7 | 100 | 4 hours on SONICS-24 | 81 |
| INV EX 51 | I_2 | B_8 | 50 | 4 hours on SONICS-24 | 33 |
| COMP EX 44 | I_2 | B_9 | 12 | 4 hours on SONICS-24 | 17 |

| | | | | | |
|---|---|---|---|---|---|
| * particle diameter (µm) | | | | | |

## Claims

1. A method of preparing dispersions including the steps of:
a)adding ultrasonic energy to a probe inserted into a dispersion formulation comprising beads having a diameter of 20 µm or more; and
b)filtering off the beads.

2. Method according to claim 1, wherein said beads are composed of glass.

3. Method according to claim 1 or 2, wherein said beads have a particle size diameter in the range from 25 µm to 200 µm.

4. Method according to any one of the claims 1 to 3, wherein said formulation is selected from the group consisting of aqueous, solvent based, oil based and radiation curable ink-jet ink dispersion formulations, comprising at least a pigment and a binder.

5. Method according to any one of the claims 1 to 4, wherein adding beads to said formulation is performed in a bead weight amount being higher than a weight amount of said pigment.

6. Method according to any one of the claims 1 to 5, wherein adding beads to said formulation is performed in a weight amount of more than twice a weight amount of said pigment.

7. Method according to any one of the claims 1 to 6, wherein further additives present in said formulation are selected from the group consisting of viscosity modifying agents, antioxidants, biocides, fungicides, pesticides, stabilizers and solvents.

8. Method according to any one of the claims 1 to 7, wherein said method is performed in batch mode.

9. Method according to any one of the claims 1 to 7, wherein said method is performed in a continuous flow-through mode.

10. Method according to claim 1, wherein the dispersion formulation is a pigment based ink-jet ink.

11. Method according to claim 10, wherein the pigment based inkjet ink is a UV curable ink-jet ink formulation.

12. Method according to claim 11, wherein UV curable ink-jet ink formulation includes metal or metal oxide nanoparticles.

## Patentansprüche

1. Ein Verfahren zur Herstellung von Dispersionen, umfassend die folgenden Schritte :
a) Einleitung von Ultraschallenergie in einen Fühler, der in eine Perlen mit einem Mindestdurchmesser von 20 µm enthaltende Dispersionszusammensetzung eingebracht ist, und
b) Abfiltern der Perlen.

2. Verfahren nach Anspruch 1, **dadurch gekennzeichnet, dass** die Perlen aus Glas zusammengesetzt sind.

3. Verfahren nach Anspruch 1 oder 2, **dadurch gekennzeichnet, dass** die Perlen einen Teilchengrößendurchmesser zwischen 25 µm und 200 µm aufweisen.

4. Verfahren nach einem der Ansprüche 1 bis 3, **dadurch gekennzeichnet, dass** die Zusammensetzung aus der Gruppe bestehend aus mindestens ein Pigment und ein Bindemittel enthaltenden Dispersionszusammensetzungen von wässriger Tintenstrahltinte, Tintenstrahltinte auf Lösungsmittelbasis, Tintenstrahltinte auf Ölbasis und strahlungshärtbarer Tintenstrahltinte gewählt wird.

5. Verfahren nach einem der Ansprüche 1 bis 4, **dadurch gekennzeichnet, dass** die Perlen in einer Perlgewichtmenge, die höher eingestellt wird als eine Gewichtsmenge des Pigments, in die Zusammensetzung eingebracht werden.

6. Verfahren nach einem der Ansprüche 1 bis 5, **dadurch gekennzeichnet, dass** die Perlen in einer Gewichtmenge, die bei mehr als mindestens das Doppelte einer Gewichtsmenge des Pigments liegt, in die Zusammensetzung eingebracht werden.

7. Verfahren nach einem der Ansprüche 1 bis 6, **dadurch gekennzeichnet, dass** weitere Zusatzstoffe in der Zusammensetzung aus der Gruppe bestehend aus Viskositätsmodifikatoren, Antioxidantien, Bioziden, Fungiziden, Pestiziden, Stabilisatoren und Lösungsmitteln gewählt werden.

8. Verfahren nach einem der Ansprüche 1 bis 7, **dadurch gekennzeichnet, dass** das Verfahren chargenweise erfolgt.

9. Verfahren nach einem der Ansprüche 1 bis 7, **dadurch gekennzeichnet, dass** das Verfahren im kontinuierlichen Durchfluss-Modus erfolgt.

10. Verfahren nach Anspruch 1, **dadurch gekennzeichnet, dass** die Dispersionszusammensetzung eine Tintenstrahltinte auf Pigmentbasis ist.

11. Verfahren nach Anspruch 10, **dadurch gekennzeichnet, dass** die Tintenstrahltinte auf Pigmentbasis eine UV-härtende Tintenstrahltintenzusammensetzung ist.

12. Verfahren nach Anspruch 11, **dadurch gekennzeichnet, dass** die UV-härtende Tintenstrahltintenzusammensetzung Metall- oder Metalloxid-Nanoteilchen enthält.

## Revendications

1. Un procédé pour la préparation de dispersions, comprenant les étapes ci-après :
a) l'application d'énergie ultrasonore à une sonde insérée dans une composition de dispersion comprenant des perles présentant un diamètre minimal de 20 µm, et
b) la séparation des perles par filtration.

2. Procédé selon la revendication 1, **caractérisé en ce que** les perles sont composées de verre.

3. Procédé selon la revendication 1 ou 2, **caractérisé en ce que** le diamètre des particules des perles varie entre 25 µm et 200 µm.

4. Procédé selon l'une quelconque des revendications 1 à 3, **caractérisé en ce que** la composition est choisie parmi le groupe composé de compositions de dispersion d'encre pour jet d'encre aqueuse, d'encre pour jet d'encre à base de solvant, d'encre pour jet d'encre à base d'huile et d'encre pour jet d'encre durcissable par rayonnement, lesdites compositions de dispersion comprenant au moins un pigment et un liant.

5. Procédé selon l'une quelconque des revendications 1 à 4, **caractérisé en ce que** la quantité pondérale des perles ajoutées à la composition est supérieure à une quantité pondérale du pigment.

6. Procédé selon l'une quelconque des revendications 1 à 5, **caractérisé en ce que** la quantité pondérale des perles ajoutées à la composition est au moins deux fois plus grande qu'une quantité pondérale du pigment.

7. Procédé selon l'une quelconque des revendications 1 à 6, **caractérisé en ce que** des additifs supplémentaires contenus dans la composition sont choisis parmi le groupe composé de modificateurs de viscosité, d'antioxydants, de biocides, de fongicides, de pesticides, de stabilisateurs et de solvants.

8. Procédé selon l'une quelconque des revendications 1 à 7, **caractérisé en ce que** le procédé est un procédé par lots.

9. Procédé selon l'une quelconque des revendications 1 à 7, **caractérisé en ce que** le procédé est effectué en mode de passage continu.

10. Procédé selon la revendication 1, **caractérisé en ce que** la composition de dispersion est une encre pour jet d'encre à base de pigment.

11. Procédé selon la revendication 10, **caractérisé en ce que** l'encre pour jet d'encre à base de pigment est une composition d'encre pour jet d'encre durcissable par rayonnement ultraviolet.

12. Procédé selon la revendication 11, **caractérisé en ce que** la composition d'encre pour jet d'encre durcissable par rayonnement ultraviolet contient des nanoparticules de métal ou d'oxyde de métal.
